# EUROPÄISCHE PATENTANMELDUNG

(11) **EP 1 797 990 A2**
(43) Veröffentlichungstag der Anmeldung: **20.06.2007**
(21) Anmeldenummer: 06124474.5
(22) Anmeldetag: 21.11.2006
(51) Int. Cl.: B23P 11/00, B21K 25/00, F16B 21/16, F16D 1/072

(54) **Verfahren zum Verstemmen eines ersten Teiles**

(30) Priorität: 19.12.2005 DE 102005060719
(71) Anmelder: SIEMENS AKTIENGESELLSCHAFT, 80333 München (DE)
(72) Erfinder: Schröder, Lothar, 61184, Karben (DE)

(57) **Zusammenfassung**

Bei dem Verfahren wird das erste Teil (1) neben einem zweiten Teil (2) angeordnet, das gegenüber dem ersten Teil (1) mit einer Kante K in einem Abstand B zum zweiten Teil (2) übersteht. Anschließend wird das zweite Teil (2) auf seiner, dem ersten Teil (1) abgewandten Stirnfläche im weiteren Abstand A von seiner Kante K über einen Stempel (3) mit einer Kraft F beaufschlagt, so dass ein plastifizierter Bereich (2') des zweiten Teiles (2) an der Kante K zum ersten Teil (1) verschoben wird und einen Vorsprung bildet, der das erste Teil (1) fixiert.

## Beschreibung

Die Erfindung bezieht sich auf ein Verfahren zum Verstemmen eines ersten Teiles. Verfahren zum Verstemmen von Teilen sind bekannt. Dabei wird das zu verstemmende Teil neben einem zweiten Teil angeordnet, das an seiner Begrenzung eine Kante aufweist, die bezüglich des zu verstemmenden Teiles übersteht. Beide Teile bestehen in der Regel aus einem Metall oder aus Metalllegierungen. Das eigentliche Verstemmen erfolgt dann derart, dass der gesamte Randbereich oder nur ein Teil davon mit der Kante des zweiten Teiles mit einer Kraft beaufschlagt wird, so dass das zweite Teil in diesem Bereich seitlich ausfließt und einen Vorsprung bildet, der am Ende an dem zu verstemmenden Teil anliegt und dieses so fixiert. Dabei ist nachteilig, dass mit sehr hohen Kräften gearbeitet werden muss und die gebildeten Vorsprünge eine nur geringe Stabilität aufweisen, was dazu führen kann, dass diese bei längeren Betriebszeiten, besonders durch Einwirkung von Schwingungen, abreißen können.

Der Erfindung liegt daher die Aufgabe zugrunde, ein Verfahren zum Verstemmen eines ersten Teiles zu schaffen, bei dem mit geringeren Kräften gearbeitet werden kann, wobei gleichzeitig Vorsprünge entstehen, die über längere Betriebszeiten eine hohe Stabilität aufweisen.

Die der Erfindung zugrunde liegende Aufgabe wird durch ein Verfahren zum Verstemmen eines ersten Teiles gelöst, bei dem das erste Teil neben einem zweiten Teil angeordnet wird, das gegenüber dem ersten Teil mit einer Kante K in einem Abstand B zum zweiten Teil übersteht, bei dem anschließend das zweite Teil auf seiner, dem ersten Teil abgewandten Stirnfläche im weiteren Abstand A von seiner Kante K über einen Stempel mit einer Kraft F beaufschlagt wird, so dass ein plastifizierter Bereich des zweiten Teiles an der Kante K zum ersten Teil verschoben wird und einen Vorsprung bildet, der das erste Teil fixiert. Bei dem ersten Teil handelt es sich beispielsweise um einen Einsatz, der durch das zweite Teil, das dann beispielsweise ein Gehäuse darstellt, fixiert werden soll. Das zweite Teil besteht aus einem metallischen Werkstoff, der zum Verstemmen geeignet ist. Der Stempel besteht beispielsweise aus gehärtetem Stahl. Die Fixierung des ersten Teiles durch den Vorsprung erfolgt beispielsweise durch ein direktes Anliegen des Vorsprunges am ersten Teil. Dies ist jedoch nicht zwingend erforderlich. Der Vorsprung kann beispielsweise auch an einem Teil anliegen, das zwischen dem Vorsprung und dem ersten Teil positioniert ist. Es hat sich in überraschender Weise gezeigt, dass sich die Größe der Kraft F minimieren lässt, wenn die Kraft F nicht direkt auf die Kante K einwirkt, sondern in einem weiteren Abstand A von der Kante K auf das zweite Teil einwirkt, was durch die konstruktive Ausgestaltung des Stempels möglich wird. Dadurch wird in vorteilhafter Weise ein plastifizierter Bereich geschaffen, der eine relativ hohe Stabilität aufweist, wobei der gebildete Vorsprung über lange Betriebszeiten stabil bleibt, so dass ein Abreißen des Vorsprunges schon nach kurzen Betriebszeiten vermieden wird.

Eine bevorzugte Ausgestaltung der Erfindung besteht darin, dass die Kraft F über eine abgerundete Fläche des Stempels auf das zweite Teil einwirkt, wobei der Radius R der abgerundeten Fläche, im Querschnitt gesehen, im Bereich von 0,1 bis 0,5 mm liegt. Dadurch lässt sich die aufzubringende Kraft F in ihrer Größe optimieren, wobei gleichzeitig die Ausbildung des plastifizierten Bereiches in vorteilhafter Weise erleichtert wird.

Gemäß einer weiteren bevorzugten Ausgestaltung der Erfindung wird die Kraft F über einen Stempel auf das zweite Teil eingebracht, der über den weiteren Abstand A verlaufend eine schräge Fläche aufweist, wobei der Winkel α zwischen der dem ersten Teil abgewandten Stirnfläche des zweiten Teiles und der schrägen Fläche zwischen 5° und 45° liegt. Durch diese Maßnahme wird die Ausbildung des plastifizierten Bereiches optimiert und die Stabilität des plastifizierten Bereiches vergrößert.

Eine weitere bevorzugte Ausgestaltung der Erfindung besteht darin, dass der Abstand B im Bereich von 1 bis 5 mm und der weitere Abstand A im Bereich von 1 bis 3 mm gewählt werden. Dadurch lässt sich das Verfahren vorteilhaft in vielen verschiedenen Einsatzzwecken durchführen.

Gemäß einer weiteren bevorzugten Ausgestaltung der Erfindung wird nach dem Anordnen des ersten Teiles neben dem zweiten Teil ein drittes Teil auf das erste Teil aufgebracht, wobei das zweite Teil gegenüber dem dritten Teil mit der Kante K übersteht, und wobei das dritte Teil in Richtung zur Kante K vom zweiten Teil sich entfernend im Querschnitt gesehen abgeschrägt verläuft und der anschließend gebildete Vorsprung am dritten Teil anliegt. Sind das erste Teil und das zweite Teil ringförmig gestaltet, so wird als drittes Teil beispielsweise ein ringförmiges Teil angeordnet. Auch das dritte Teil besteht in der Regel aus einem metallischen Werkstoff. Nachdem die Kraft F im weiteren Abstand A auf das zweite Teil eingebracht wird, bildet sich der plastifizierte Bereich aus und bildet einen Vorsprung, der dann direkt am dritten Teil anliegt. Das dritte Teil drückt dann auf das zu verstemmende erste Teil, so dass dieses durch den gebildeten Vorsprung über das dritte Teil fixiert wird. Dabei ist vorteilhaft, dass die Ausbildung des Vorsprunges in seiner Form optimiert wird, was sich vorteilhaft auf die Lebensdauer des Vorsprunges auswirkt. Gleichzeitig wird die Krafteinwirkung auf das zu verstemmende erste Teil optimiert.

Die Erfindung wird nachfolgend anhand der Zeichnung (Fig. 1 bis Fig. 3) näher und beispielhaft erläutert.
- Fig. 1: zeigt das erste Teil, das zweite Teil, den Stempel sowie das dritte Teil vereinfacht im Querschnitt vor dem Verstemmen.
- Fig. 2: zeigt das erste Teil, das zweite Teil, den Stempel und das dritte Teil im Querschnitt dreidimensional vor dem Verstemmen.
- Fig. 3: zeigt das erste Teil, das zweite Teil, den Stempel und das dritte Teil im Querschnitt dreidimensional nach dem Verstemmen.

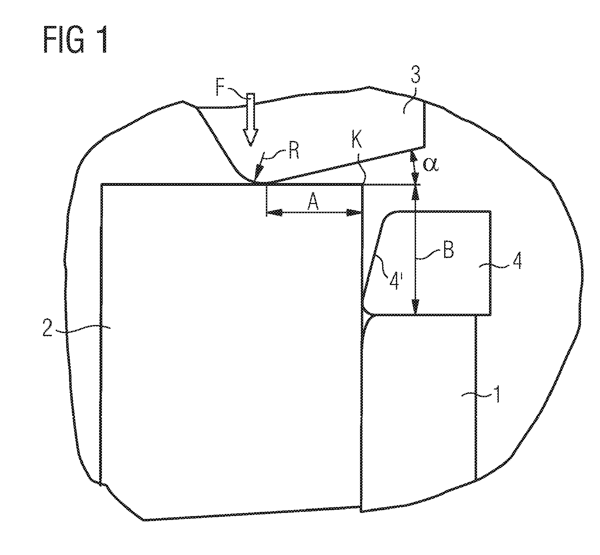

In Fig. 1 sind das erste Teil 1, das zweite Teil 2, der Stempel 3 und das dritte Teil 4 vereinfacht im Querschnitt dargestellt. Bei dem Verfahren zum Verstemmen des ersten Teiles 1 wird das erste Teil 1 neben dem zweiten Teil 2 angeordnet, wobei das zweite Teil 2 gegenüber dem ersten Teil 1 mit einer Kante K in einem Abstand B zum zweiten Teil 2 übersteht. Der Abstand B kann dabei beispielsweise im Bereich von 1 bis 5 mm liegen. Anschließend wird das zweite Teil 2 auf seiner, dem ersten Teil 1 abgewandten Stirnfläche im weiteren Abstand A von seiner Kante K über einen Stempel 3 mit einer Kraft F in Pfeilrichtung beaufschlagt. Der weitere Abstand A kann dabei beispielsweise im Bereich von 1 bis 3 mm gewählt werden. Durch die Beaufschlagung der Kraft F auf das zweite Teil 2 wird dann ein plastifizierter Bereich (nicht dargestellt) des zweiten Teiles 2 an der Kante K zum ersten Teil verschoben, so dass sich ein Vorsprung bildet (nicht dargestellt), der das erste Teil 1 fixiert. Fig. 1 zeigt die Anordnung vor dem Verstemmen. Der Stempel 3 weist eine, über den weiteren Abstand A verlaufende schräge Fläche auf, wobei der Winkel α zwischen der dem ersten Teil 1 abgewandten Stirnfläche des zweiten Teiles 2 und der schrägen Fläche bevorzugt im Bereich zwischen 5° und 45° liegt. Die Kraft F wird dabei über eine abgerundete Fläche des Stempels 3 auf das zweite Teil 2 eingebracht, wobei der Radius R der abgerundeten Fläche, im Querschnitt gesehen, beispielsweise im bevorzugten Bereich von 0,1 bis 0,5 mm liegt. Nach dem Anordnen des ersten Teiles 1 neben dem zweiten Teil 2 wird auf das erste Teil 1 ein drittes Teil 4 aufgebracht, wobei das zweite Teil 2 gegenüber dem dritten Teil 4 mit der Kante K übersteht. Das dritte Teil 4 verläuft in Richtung der Kante K vom zweiten Teil 2 sich entfernend im Querschnitt gesehen abgeschrägt. Der zum Schluss gebildete Vorsprung (nicht dargestellt) liegt dann am dritten Teil 4 an, über welches dann das erste Teil 1 nach dem Verstemmen fixiert wird.

In Fig. 2 sind das erste Teil 1, das zweite Teil 2, der Stempel 3 sowie das dritte Teil 4 im Querschnitt dreidimensional vor dem Verstemmen dargestellt. Das erste Teil 1, das zweite Teil 2 und das dritte Teil 4 sind dabei kreisförmig verlaufend zueinander angeordnet.

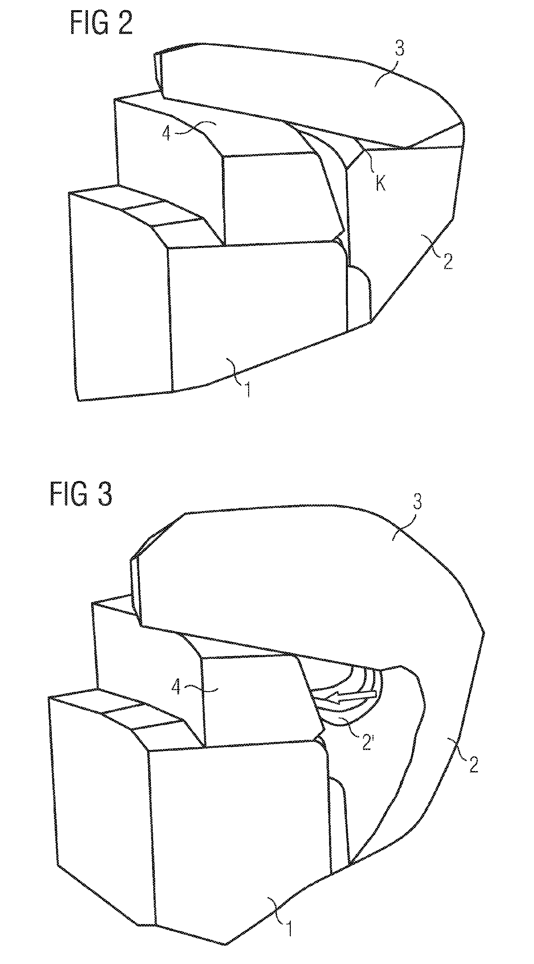

In Fig. 3 sind das erste Teil 1, das zweite Teil 2, der Stempel 3 sowie das dritte Teil 4 nach dem Verstemmen im Querschnitt dreidimensional dargestellt. Durch die Einwirkung der Kraft F (nicht dargestellt) bildet sich ein plastifizierter Bereich 2' des zweiten Teiles 2 aus, der zum ersten Teil 1 in Pfeilrichtung verschoben wird und dadurch einen Vorsprung bildet, der dann am dritten Teil 4 anliegt. Die Anordnung des dritten Teiles 4 optimiert die Ausbildung des plastifizierten Bereiches 2' und somit die Bildung des Vorsprunges.

## Patentansprüche

1. Verfahren zum Verstemmen eines ersten Teiles (1), bei dem das erste Teil (1) neben einem zweiten Teil (2) angeordnet wird, das gegenüber dem ersten Teil (1) mit einer Kante K in einem Abstand B zum zweiten Teil (2) übersteht, bei dem anschließend das zweite Teil (2) auf seiner, dem ersten Teil (1) abgewandten Stirnfläche im weiteren Abstand A von seiner Kante K über einen Stempel (3) mit einer Kraft F beaufschlagt wird, so dass ein plastifizierter Bereich (2') des zweiten Teiles (2) an der Kante K zum ersten Teil (1) verschoben wird und einen Vorsprung bildet, der das erste Teil (1) fixiert.

2. Verfahren nach Anspruch 1, bei dem die Kraft F über eine abgerundete Fläche des Stempels (3) auf das zweite Teil (2) einwirkt, wobei der Radius R der abgerundeten Fläche, im Querschnitt gesehen, im Bereich von 0,1 bis 0,5 mm liegt.

3. Verfahren nach Anspruch 1 oder Anspruch 2, bei dem die Kraft F über einen Stempel (3) auf das zweite Teil (2) eingebracht wird, der über dem weiteren Abstand A verlaufend eine schräge Fläche aufweist, wobei der Winkel α zwischen der dem ersten Teil (1) abgewandten Stirnfläche des zweiten Teiles (2) und der schrägen Fläche zwischen 5° und 45° liegt.

4. Verfahren nach einem der Ansprüche 1 bis 3, bei dem der Abstand B im Bereich von 1 bis 5 mm und der weitere Abstand A im Bereich von 1 bis 3 mm gewählt werden.

5. Verfahren nach einem der Ansprüche 1 bis 4, bei dem nach dem Anordnen des ersten Teiles (1) neben dem zweiten Teil (2) ein drittes Teil (4) auf das erste Teil (1) aufgebracht wird, wobei das zweite Teil (2) gegenüber dem dritten Teil (4) mit der Kante K übersteht, und wobei das dritte Teil (4) in Richtung zur Kante K vom zweiten Teil (2) sich entfernend im Querschnitt gesehen abgeschrägt verläuft und der anschließend gebildete Vorsprung am dritten Teil (4) anliegt.
